# EUROPÄISCHE PATENTSCHRIFT

(11) **EP 1 248 924 B1**
(45) Veröffentlichungstag und Bekanntmachung des Hinweises auf die Patenterteilung: **20.08.2003**
(21) Anmeldenummer: 01905649.8
(22) Anmeldetag: 05.01.2001
(51) Int. Cl.: F16J 15/16, F01D 25/24, F23R 3/00, F02K 1/82, F01D 11/08

(54) **THERMISCH BELASTBARE WAND UND VERFAHREN ZUR ABDICHTUNG EINES SPALTES IN EINER THERMISCH BELASTETEN WAND**
THERMALLY STRESSABLE WALL AND METHOD FOR SEALING A GAP IN A THERMALLY STRESSED WALL
PAROI POUVANT ETRE SOUMISE A UNE CONTRAINTE THERMIQUE ET PROCEDE D'ETANCHEIFICATION D'UNE FENTE DANS UNE PAROI SOUMISE A UNE CONTRAINTE THERMIQUE

(30) Priorität: 20.01.2000 EP 00101113
(43) Veröffentlichungstag der Anmeldung: 16.10.2002
(73) Patentinhaber: SIEMENS AKTIENGESELLSCHAFT, 80333 München (DE)
(72) Erfinder: BOLMS, Hans-Thomas, 45481 Mülheim a.d. Ruhr (DE); TIEMANN, Peter, 58452 Witten (DE)
(86) Internationale Anmeldenummer: EP0100076
(87) Internationale Veröffentlichungsnummer: WO01053729

(56) Entgegenhaltungen:
- EP-A- 0 836 055
- GB-A- 2 166 120
- GB-A- 2 298 267
- US-A- 5 387 082

## Beschreibung

Die Erfindung betrifft eine durch ein Heißgas thermisch belastbare Wand mit einem ersten Wandsegment und einem zweiten, zum ersten Wandsegment unter Bildung eines Spaltes unmittelbar benachbarten Wandsegment. Die Erfindung betrifft auch ein Verfahren zur Abdichtung eines Spaltes zwischen einem ersten und einem zweiten Wandsegment einer durch ein Heißgas thermisch belasteten Wand. Ein derartiges System ist aus der US-A-5 387 082 bekannt.

Die US-PS 5,221,096 zeigt eine mehrlagige Dichtung zur Reduzierung einer Kühlluftleckage durch einen Spalt zwischen zwei Stufen eines Gasturbinentriebwerkes. Ein erster Teil der Dichtung ist so dünn, daß er unter einem Druckgradienten so verformt wird, daß eine Abdichtung des Spaltes erfolgt. Ein zweiter Teil der Dichtung ist mit dem ersten Teil verbunden und so dick ausgeführt, daß er der Dichtung eine Steifigkeit verleiht. Durch diese Steifigkeit wird die Montage der Dichtung erleichtert.

Die EP 0 139 072 A1 zeigt eine temperaturresistente, i-förmige Federdichtung. Diese Dichtung ist bei sehr hohen und ungleichmäßig verteilten Temperaturen vorteilhaft einsetzbar.

Einen Dichtring zeigt die US-PS 5,058,906. Der metallische Dichtring ist so ausgebildet, daß er elastisch verformbar ist. Dadurch ergibt sich insbesondere eine Eignung für die Abdichtung einer Leitung, bei der große Temperaturvariationen auftreten.

Die US-PS 4,537,024 zeigt die Abdichtung eines Spaltes in einer Gasturbine mittels eines im Querschnitt schleifenförmigen, flexiblen Dichtringes, der in gegenüberliegende Nuten zweier Bauteile eingefügt ist, zwischen den ein abzudichtender Spalt besteht.

All diesen Anordnungen zur Abdichtung eines Spaltes ist gemeinsam, daß ein separates Dichtelement zur Abdichtung verwendet wird. Nachteiligerweise ist die Dichtwirkung eines solchen Dichtelementes so tempersturabhängig daß sie gerade bei hohen Temperaturen geringer wird. Zudem kann-die Montage eines solchen Dichtelementes sehr aufwendig und schwierig sein. Hinzu kommt, daß solche Dichtelemente gerade bei Hochtemperaturanwendungen Alterungsprozessen ausgesetzt sind, die die Lebensdauer unter Umständen erheblich begrenzen.

Der Erfindung liegt dementsprechend die Aufgabe zugrunde, eine durch ein Heißgas thermisch belastbare Wand anzugeben, bei der ein Spalt zwischen zwei Wandsegmenten dieser Wand in einfacher Weise besonders wirksam gerade bei hohen Temperaturen abdichtbar ist. Weitere Aufgabe der Erfindung ist die Angabe eines Verfahrens zur Abdichtung eines Spaltes zwischen zwei Wandsegmenten einer durch ein Heißgas thermisch belasteten Wand, welches konstruktiv einfach durchführbar ist und gerade bei hohen Temperaturen zu einer guten Abdichtung führt.

Erfindungsgemäß wird die auf eine Wand gerichtete Aufgabe gelöst durch Angabe einer durch ein Heißgas thermisch belastbaren Wand mit einem ersten Wandsegment und einem zweiten, zum ersten Wandsegment unter Bildung eines Spaltes unmittelbar benachbarten Wandsegment, wobei das erste Wandsegment eine Anpreßfläche und das zweite Wandssgment einen Biegeansatz mit einer Heißfläche und einer Kaltfläche aufweist, wobei sich die Heißfläche unter thermischer Belastung stärker erwärmt als die Kaltfläche, so daß sich durch eine im Bereich einerseits der Heißfläche und andererseits der Kaltfläche unterschiedliche thermische Ausdehnung der Biegeansatz gegen die Anpreßfläche pressend und dadurch den Spalt abdichtend biegt.

Mit der Erfindung wird der völlig neue Weg eingeschlagen, den Spalt zwischen den Wandsegmenten nicht durch ein separates Dichtelement sondern durch die Wandsegmente selbst abzudichten. Dies wird gerade bei hohen Temperaturen dadurch erreicht, daß sich ein Teil des ersten Wandsegmentes durch eine thermische Verbiegung an einen Teil des zweiten Wandsegmentes anpreßt und dadurch den Spalt schließt. Die thermische Verbiegung geschieht ähnlich wie bei einem Bimetallstreifen durch die unterschiedliche thermische Ausdehnung eines kalten und eines heißen Teiles des Wandsegmentes. Im Gegensatz zum Bimetallstreifen ist die unterschiedliche thermische Ausdehnung aber nicht in erster Linie durch verschiedene Ausdehnungskoeffizienten verschiedener Materialien hervorgerufen, sondern durch eben die unterschiedliche Temperatur der Heißfläche einerseits und der Kaltfläche andererseits. Gegebenenfalls kann dieser Effekt aber auch durch eine geeignete Materialpaarung verstärkt werden, d. h. durch eine Paarung von Materialien unterschiedlichen Wärmeausdehnungskoeffizienten kann die Verbiegung verstärkt werden. Vorzugsweise ist der Biegeansatz ein freistehender Fortsatz des Wandsegmentes, der überlappend mit dem unmittelbar benachbarten Wandsegment angeordnet ist.

Bevorzugtermaßen ist am Biegeansatz oder auf der Anpreßfläche ein sich durch das Anpressen des Biegeansatzes an die Anpreßfläche verformender und den Spalt zusätzlich abdichtender Ansatz angeordnet. Weiter bevorzugt ist auf dem Biegeansatz oder auf der Anpreßfläche eine verformbare Beschichtung aufgebracht. Vorzugsweise ist zwischen dem Biegeansatz und der Anpreßfläche ein Dichtmaterial angeordnet.

Durch den Ansatz, die Beschichtung oder das Dichtmaterial wird eine zusätzliche Abdichtung des Spaltes durch eine sich an die spaltbegrenzenden Oberflächen angleichende Verformung der Beschichtung, des Dichtmateriales oder des Ansatzmateriales erreicht. Insbesondere können hierdurch kleinere Unregelmäßigkeiten und Unebenheiten zwischen dem Biegeansatz und der Anpreßfläche ausgeglichen werden.

Vorzugsweise ist die Kaltseite mit einem Kühlmedium kühlbar. Das Kühlmedium ist weiter bevorzugt Kühlluft. Bei thermisch besonders hochbelasteten Wandsegmenten kann eine solche Kühlung erforderlich werden. Durch den Spalt kommt es dabei zu einer Leckage dieses Kühlmediums. Einem solchen häufig unerwünschten Verlust des Kühlmediums oder dem unerwünschten Einmischen des Kühlmediums in das Heißgas wird durch die Abdichtung des Spaltes entgegengewirkt. Dies ist - zusätzlich zur Abdichtung des Spaltes gegen einen Eintritt von Heißgas - ein Vorteil der wirksamen und gerade bei hohen Temperaturen besonders effektiven Spaltabdichtung.

Bevorzugtermaßen ist die Wand als eine Strömungskanalwand einer thermischen Strömungsmaschine, weiter bevorzugt einer Gasturbine, ausgeführt. In einer Gasturbine treten sowohl in einer Verbrennungszone, also einer Brennkammer, als auch in einem Strömungskanal der Gasturbine durch das durch die Gasturbine strömende Heißgas besonders hohe Temperaturen auf. Eine Führung des Heißgases durch eine thermisch sehr hoch belastbaren Wand ist hier notwendig. Eine solche Wand muß in der Regel durch Kühlluft effektiv gekühlt werden. Diese Kühlluft wird häufig einem Verdichter der Gasturbine entnommen. Damit wird der Wirkungsgrad der Gasturbine verringert, da die Kühlluft nicht einer Verbrennung mit dem nötigen Druck zugeführt wird. Der Kühlluftbedarf ist somit zur Erhaltung eines möglichst hohen Wirkungsgrades möglichst gering zu halten. Spalte zwischen Wandsegmenten der thermisch belasteten Wand müssen somit gerade in einer Gasturbine gegen eine Kühlluftleckage besonders gut abgedichtet werden.

Bevorzugt ist das erste Wandsegment als ein Führungsring für einen Laufschaufelkranz und das zweite Wandsegment als ein Plattformring eines Leitschaufelkranzes ausgeführt. Bevorzugtermaßen ist das zweite Wandsegment als ein Führungsring für einen Lautschaufelkranz und das erste Wandsegment als ein Plattformring eines Leitschaufelkranzes ausgeführt. Der Strömungskanal einer Gasturbine weist abwechselnd aufeinander folgend Leitschaufel und Laufschaufeln in jeweiligen Leitschaufelkränzen und Laufschaufelkränzen angeordnet, auf. Einem mit einem Gasturbinenrotor verbundenen, rotierenden Laufschaufelkranz ist gehäuseseitig ein Führungsring gegenüberliegend angeordnet. Die Leitschaufeln weisen jeweils schaufelfußseitig eine Plattform auf, die zusammen einen Plattformring bilden, welcher den Strömungskanal gehäuseseitig begrenzt. Im Kopfteil jeder Leitschaufel angeordnete Plattformen bilden einen rotorseitigen Plattformring zur Begrenzung des Strömungskanales. Die abwechselnd aufeinander folgenden Führungsringe und Plattformringe bilden Wandsegmente, zwischen denen ein Spalt verbleibt. Dieser Spalt wird wie oben beschrieben durch die Biegefähigkeit eines Biegeansatzes abgedichtet.

In bevorzugter Ausgestaltung ist die Wand als eine Brennkammerauskleidung, insbesondere einer Gasturbinenbrennkammer, ausgebildet. Die Brennkammerauskleidung ist hierbei durch sich jeweils mit dem Biegeansatz und der Anpreßfläche überlappende Wandsegmente aufgebaut. Zum Beispiel könnte ein solches Wandsegment ein Brennkammerstein sein, der auf der einen Seite einen Biegeansatz und auf einer gegenüberliegenden Seite eine Anpreßfläche aufweist, so daß jedes Wandsegment sowohl einen aktiven als auch einen passiven Dichtbereich aufweist, d. h. ein Bereich biegt sich aktiv zur Abdichtung des Spaltes, während der andere Bereich passiv den Anpreßdruck des benachbarten Biegeansatzes aufnimmt. Natürlich ist eine solche gleichzeitige Verwirklichung passiver und aktiver Dichtbereiche mit einem einzigen Wandsegment nicht nur für die Brennkammerauskleidung, sondern in jeder thermisch belastbaren Wandstruktur denkbar.

Erfindungsgemäß wird die auf ein Verfahren gerichtete Aufgabe gelöst durch Angabe eines Verfahrens zur Abdichtung eines Spaltes zwiscnen einem ersten und einem zweiten Wandsegment einer durch ein Heißgas thermisch belasteten Wand, wobei ein Biegeansatz des ersten Wandsegmentes durch eine Erwärmung so gegen eine Anpreßfläche des zweiten Wandsegmentes gepreßt wird, daß sich eine Abdichtung des Spaltes ergibt.

Die Vorteile eines solchen Verfahren ergeben sich entsprechend den obigen Ausführungen zu den Vorteilen der thermisch belastbaren Wand.

Die Erfindung wird beispielhaft anhand der Zeichnungen näher erläutert. Es zeigen teilweise schematisch und nicht maßstäblich:
Figur 1 eine Gasturbine in einem Längsschnitt,
Figur 2 eine thermisch belastbare Wand in einem Längsschnitt, Figur 3 einen Biegeansatz mit zusätzlichem Ansatz,
Figur 4 eine Anpreßfläche mit einer verformbaren Beschichtung,
Figur 5 einen Spalt zwischen zwei benachbarten Wandsegmenten in kaltem und heißem Zustand und
Figur 6 einen Teil einer Brennkammerauskleidung.

Gleiche Bezugszeichen haben in den verschiedenen Figuren die gleiche Bedeutung.

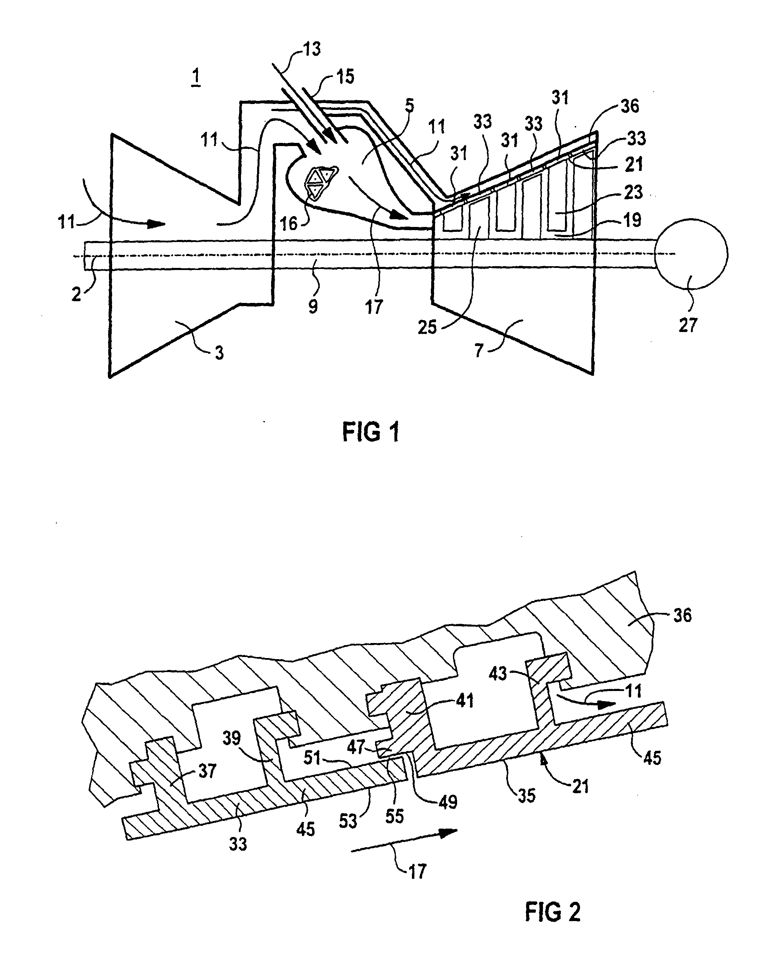

Figur 1 zeigt schematisch in einem Längsschnitt eine Gasturbine 1. Entlang einer Turbinenachse 2 sind hintereinander angeordnet: ein Verdichter 3, eine Ringbrennkammer 5 und ein Turbinenteil 7. Der Verdichter 3 und das Turbinenteil 7 sind auf einem Rotor 9 angeordnet. Im Verdichter 3 wird Luft 11 verdichtet und einem Brenner 15 zugeführt. Dem Brenner 15 wird ebenfalls Brennstoff 13 zugeführt. In der mit einer Brennkammerauskleidung 16 versehenen Ringbrennkammer 5 werden die Luft 11 und der Brennstoff 13 zu einem heißen Abgas 17 verbrannt. Das Heißgas 17 wird dem Turbinenteil 7 zugeleitet. Das Turbinenteil 7 weist einen Stromungskanal 19 auf. Der Strömungskanal 19 wird durch eine thermisch belastbare Wand 21 begrenzt. Die thermisch belastbare Wand 21 ist aus Wandsegmenten 33, 35 aufgebaut. Ein Teil der Wandsegmente ist durch Führungsringe 35 und ein anderer Teil der Wandsegmente als Plattformringe 33 ausgebildet. Die Führungsringe 33 sind am Rotor 9 angeordneten Laufschaufeln 25 gegenüber angeordnet. Die Plattformringe 33 sind Teil eines mit dem Gehäuse verbundenen Leitschaufelkranzes 23. Luft 11 aus dem Verdichter 3 wird außer zum Brenner 15 auch zum Turbinenteil 7 geleitet und dient unter anderem der Kühlung der Wandsegmente 33, 35. Zwischen den Wandsegmenten 33, 35 verbleibt ein Spalt, durch den es zu einer Kühlluftleckage kommt. Die Abdichtung dieses Spaltes zur Verminderung des Kühlluftverlustes wird näher anhand von Figur 2 beschrieben.

Figur 2 zeigt ein Gehäuse 36 einer Gasturbine 1 unmittelbar zueinander benachbart angeordnet einen Plattformring 33 und einen Führungsring 35. Der Plattformring 33, d. h. damit auch die jeweils zugeordnete, hier nicht näher dargestellte Leitschaufelkranz 23, ist über eine erste Verhakung 37 und eine zweite Verhakung 39 mit dem Gehäuse 36 verbunden. Der Führungsring 35 ist über erste Führungsringverhakungen 41 und zweite Führungsringverhakungen 43 mit dem Gehäuse 36 verbunden. Die jeweiligen ersten und zweiten Verhakungen 37, 39 bzw. 41, 43 des Plattformringes 33 bzw. des Führungsringes 35 sind nun soweit von einem jeweiligen Rand des Plattformringes 33 bzw. des Führungsringes 35 entfernt, daß sich sowohl für den Plattformring 33 als auch für den Führungsring 35 auf der stromabgelegenen Seite, bezogen auf die Strömungsrichtung des Heißgases 17, ein freistehender Biegeansatz 45 ergibt. Auf der zu diesem Biegeansatz 45 jeweils gegenüberliegenden Seite ist ein Anpreßsockel 47 ausgebildet, der in Strömungsrichtung des Heißgases 17 mit dem Biegeansatz 45 des benachbarten Wandsegmentes überlappt. Jeder Eiegeansatz 45 weist eine dem Heißgas 17 ausgesetzte Heißfläche 53 und eine der Heißfläche 53 gegenüberliegende Kaltfläche 51 auf. Zwischen jedem Biegeansatz 45 und der durch die Überlappung gegenüberliegenden Anpreßfläche 49 ist ein Spalt 55 gebildet. Durch das Heißgas 17 wird die Heißfläche 53 des Biegeansatzes 45 stärker erwärmt als die Kaltfläche 51. Damit dehnt sich der an die Heißfläche 53 angrenzende Bereich des Biegeansatzes 45 stärker aus als der an die Kaltfläche 51 angrenzende Bereich. Durch diese unterschiedliche thermische Ausdehnung verbiegt sich der Biegeansatz 45 in Richtung auf die gegenüberliegende Anpreßfläche 49 des nachfolgenden Wandsegmentes 35. Der Biegeansatz 45 preßt sich dabei an die Anpreßfläche 49 an. Hierdurch wird der Spalt 55 abgedichtet. Damit wird eine Leckage von Kühlluft 11 verringert oder gar ganz vermieden. Ein separates Dichtelement ist in dieser Konfiguration nicht nötig. Insbesondere führt aber die durch die thermische Verbiegung hervorgerufene Dichtwirkung zu einer besonders guten Abdichtung gerade bei hohen Temperaturen. Bei konventioneller Abdichtung mit einem separaten Dichtelement verschlechtert sich in der Regel die Dichtwirkung bei höheren Temperaturen.

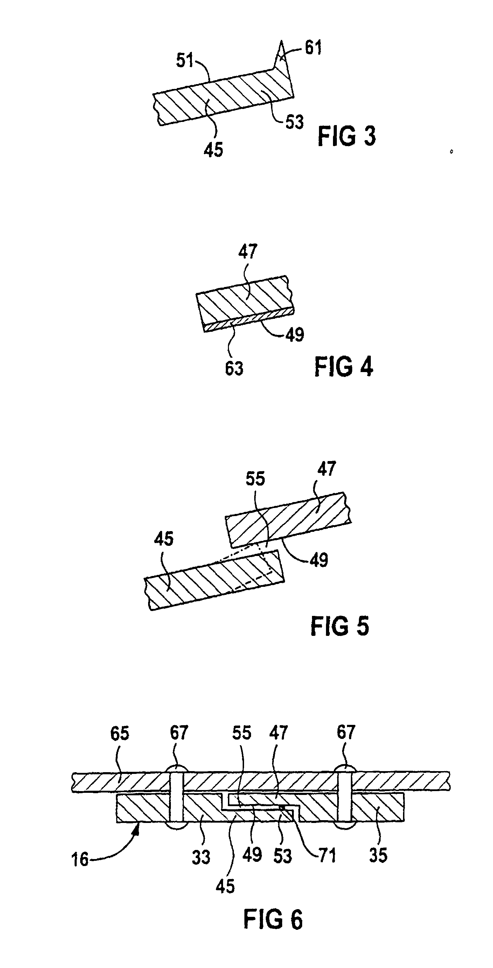

Figur 3 zeigt einen Biegeansatz 45, bei dem am Ende auf der Kaltfläche ein zusätzlicher Ansatz 61 angeordnet ist. Dieser zusätzliche Ansatz 61 ist in seiner Dicke und Form so ausgelegt, daß er sich beim anpressen des Biegeansatzes 45 an die Anpreßfläche 49 verformt und dabei Unebenheiten und Ungleichmäßigkeiten zwischen dem Biegeansatz 45 und der Anpreßfläche 49 ausgleicht. Dies hat eine weiter verbesserte Dichtwirkung zur Abdichtung des Spaltes 55 zur Folge. Insbesondere erfolgt die Verformung des zusätzlichen Ansatzes 61 elastisch.

In Figur 4 ist eine weitere Möglichkeit zur Verbesserung der Dichtwirkung gezeigt. Hier ist die Anpreßfläche 49 mit einer verformbaren Beschichtung 63 versehen. Dies führt ebenfalls zu einem Ausgleich von Unebenheiten zwischen dem Biegeansatz 45 und der Anpreßfläche 49. Natürlich kann die Beschichtung 63 auch auf dem Biegeansatz 45 angeordnet sein, genau so wie der zusätzliche Ansatz 61 auch auf der Anpreßfläche 49 angeordnet sein kann.

Figur 5 zeigt einen Biegeansatz 45 und einen überlappend gegenüberliegenden Anpreßansatz 47 mit zugehöriger Anpreßfläche 49 in kaltem Zustand. In diesem Zustand ist der Biegeansatz 45 nicht verbogen und der Spalt 55 geöffnet. Gestrichelt dargestellt ist die Form des Biegeansatzes 45 bei hohen Temperaturen. Hier ist der Biegeansatz 45 so verbogen, daß der Spalt 55 geschlossen ist. Der Biegeansatz 55 preßt sich dabei an die Anpreßfläche 49.

Figur 6 zeigt einen Teil einer Brennkammerauskleidung 16, die eine thermisch belastbare Wand 21 darstellt. Mit einer Trägerwand 65 sind über jeweilige Bolzen 67 ein erstes Wandsegment 35 und ein zweites Wandsegment 33 verbunden. Entsprechend obiger Darstellung überlappt ein Biegeansatz 45 des ersten Wandsegmentes 35 mit einem Anpreßansatz 47 des zweiten Wandsegmentes 33. Zwischen dem Biegeansatz 45 und dem Anpreßansatz 47 verbleibt der Spalt 55. Bei hohen Temperaturen wird dieser Spalt 55 durch eine Verbiegung des Biegeansatzes 45 abgedichtet, wie oben näher erläutert. Zusätzlich ist der Spalt 55 ein Dichtmaterial 71 angeordnet, welches sich bei einem anpressen des Biegeansatzes 45 an die Anpreßfläche 49 verformt und dabei Unebenheiten so ausgleicht, daß eine zusätzliche Dichtwirkung erreicht wird.

## Patentansprüche

1. Durch ein Heißgas (17) thermisch belastbare Wand (21) mit einem ersten Wandsegment (35) und einem zweiten, zum ersten Wandsegment (35) unter Bildung eines Spaltes (55) unmittelbar benachbarten Wandsegment (33),
**dadurch gekennzeichnet, daß** das erste Wandsegment (35) eine Anpreßfläche (49) und das zweite Wandsegment (33) einen Biegeansatz (45) mit einer Heißfläche (53) und einer Kaltfläche (51) aufweist, wobei sich die Heißfläche (53) unter thermischer Belastung stärker erwärmt als die Kaltfläche (51), so daß sich durch eine im Bereich einerseits der Heißfläche (53) und andererseits der Kaltfläche (51) unterschiedliche thermische Ausdehnung der Biegeansatz (45) gegen die Anpreßfläche (49) pressend, und dadurch den Spalt (55) abdichtend, biegt.

2. Wand (21) nach Anspruch 1,
**dadurch gekennzeichnet, daß** am Biegeansatz (45) oder auf der Anpreßfläche (49) ein sich durch das Anpressen des Biegeansatzes (45) an die Anpreßfläche (45) verformender und den Spalt (55) zusätzlich abdichtender Ansatz (61) angeordnet ist.

3. Wand (21) nach Anspruch 1 oder 2,
**dadurch gekennzeichnet, daß** auf dem Biegeansatz (45) oder auf der Anpreßfläche (49) eine verformbare Beschichtung (63) aufgebracht ist.

4. Wand (21) nach Anspruch 1, 2 oder 3,
**dadurch gekennzeichnet, daß** zwischen dem Biegeansatz (45) und der Anpreßfläche (49) ein Dichtmaterial (71) angeordnet ist.

5. Wand (21) nach einem der vorhergehenden Ansprüche,
**dadurch gekennzeichnet, daß** die Kaltseite (51) mit einem Kühlmedium (11) kühlbar ist.

6. Wand (21) nach einem der vorhergehenden Ansprüche,
**gekennzeichnet durch** eine Ausführung als Strömungskanalwand einer thermischen Strömungsmaschine (1).

7. Wand (21) nach Anspruch 6,
**gekennzeichnet durch** eine Ausführung als Strömungskanalwand einer Gasturbine (1).

8. Wand (21) nach Anspruch 7,
**dadurch gekennzeichnet, daß** das erste Wandsegment (35) als ein Führungsring für einen Laufschaufelkranz (25) und das zweite Wandsegment (33) als ein Plattformring eines Leitschaufelkranzes (23) ausgeführt ist.

9. Wand (21) nach Anspruch 7,
**dadurch gekennzeichnet, daß** das zweite Wandsegment (33) als ein Führungsring für einen Laufschaufelkranz (25) und das erste Wandsegment (35) als ein Plattformring eines Leitschaufelkranzes (23) ausgeführt ist.

10. Wand (21) nach einem der Ansprüche 1 bis 5,
**gekennzeichnet durch** eine Ausführung als Brennkammerauskleidung (16), insbesondere einer Gasturbinenbrennkammer (5).

11. Verfahren zur Abdichtung eines Spaltes (55) zwischen einem ersten und einem zweiten Wandsegment (35,33) einer durch ein Heißgas (17) thermisch belasteten Wand (21),
**dadurch gekennzeichnet, daß** ein Biegeansatz (45) des ersten Wandsegmentes (35) durch eine Erwärmung so gegen eine Anpreßfläche (49) des zweiten Wandsegmentes (33) gepreßt wird, daß sich eine Abdichtung des Spaltes (55) ergibt.

## Claims

1. Wall (21) which can be thermally stressed by a hot gas (17), having a first wall segment (35) and a second wall segment (33), which is immediately adjacent to the first wall segment (35) with the formation of a gap (55), **characterized in that** the first wall segment (35) has a contact surface (49) and the second wall segment (33) has a bending extension (45) with a hot surface (53) and a cold surface (51), the hot surface (53) being more strongly heated than the cold surface (51) under thermal stress, so that due to a different thermal expansion in the region of the hot surface (53), on the one hand, and of the cold surface (51), on the other, the bending extension (45) bends so as to press against the contact surface (49) and, by this means, bends so as to seal the gap (55).

2. Wall (21) according to Claim 1, **characterized in that** an extension (61), which is deformed by the contact pressure between the bending extension (45) and the contact surface (45) and additionally seals the gap (55), is arranged on the bending extension (45) or on the contact surface (49).

3. Wall (21) according to Claim 1 or 2, **characterized in that** a deformable coating (63) is applied to the bending extension (45) or to the contact surface (49).

4. Wall (21) according to 'Claim 1, 2 or 3, **characterized in that** a sealing material (71) is arranged between the bending extension (45) and the contact surface (49).

5. Wall (21) according to one or more of the preceding claims, **characterized in that** the cold side (51) can be cooled by a cooling medium (11).

6. Wall (21) according to one or more of the preceding claims, **characterized by** an embodiment as a flow duct wall of a thermal turbomachine (1).

7. Wall (21) according to Claim 6, **characterized by** an embodiment as a flow duct wall of a gas turbine (1).

8. Wall (21) according to Claim 7, **characterized in that** the first wall segment (35) is embodied as a guide ring for a rotor blade ring (25) and the second wall segment (33) is embodied as a platform ring of a guide vane ring (23).

9. Wall (21) according to Claim 7, **characterized in that** the second wall segment (33) is embodied as a guide ring for a rotor blade ring (25) and the first wall segment (35) is embodied as a platform ring of a guide vane ring (23).

10. Wall (21) according to one of Claims 1 to 5, **characterized by** an embodiment as a combustion chamber lining (16), in particular of a gas turbine combustion chamber (5).

11. Method for sealing a gap (55) between a first and a second wall segment (35, 33) of a wall (21) which is thermally stressed by a hot gas (17), **characterized in that** a bending extension (45) of the first wall segment (35) is pressed by a heating process against a contact surface (49) of the second wall segment (33) in such a way that a sealing of the gap (55) occurs.

## Revendications

1. Paroi qu'on peut soumettre à une contrainte thermique (21) par un gaz chaud (17), ayant un premier segment de paroi (35) et ayant un deuxième segment de paroi (33) immédiatement voisin du premier segment de paroi (35) en formant une fente (55), **caractérisée en ce que** le premier segment de paroi (35) présente une surface d'appui (49) et le deuxième segment de paroi (33) un épaulement de flexion (45) muni d'une surface chaude (53) et d'une surface froide (51), la surface chaude (53) chauffant plus sous la contrainte thermique que la surface froide (51) de sorte que l'épaulement de flexion (45) fléchit en se pressant contre la surface d'appui (49) et donc rend étanche la fente (55) grâce à une dilatation thermique différente dans la zone d'une part de la surface chaude (53) et d'autre part de la surface froide (51).

2. Paroi (21) selon la revendication 1 **caractérisée en ce que** sur l'épaulement de flexion (45) ou sur la surface d'appui (49) est disposé un épaulement (61) qui se déforme lorsque l'épaulement de flexion (45) s'appuie sur la surface d'appui (49) et qui assure une étanchéification supplémentaire de la fente (55).

3. Paroi (21) selon la revendication 1 ou 2 **caractérisée en ce qu'**un revêtement (63) déformable est appliqué sur l'épaulement de flexion (45) ou sur la surface d'appui (49).

4. Paroi (21) selon la revendication 1,2 ou 3 **caractérisée en ce que** le matériau étanche (71) est de préférence disposé entre l'épaulement de flexion (45) et la surface d'appui (49).

5. Paroi (21) selon l'une des revendications précédentes **caractérisée en ce que** le côté froid (51) peut être refroidi par un agent de refroidissement (11).

6. Paroi (21) selon l'une des revendications précédentes **caractérisée par** une réalisation en tant que paroi de canal d'écoulement d'une turbomachine (1) thermique.

7. Paroi (21) selon la revendication 6 **caractérisée par** une réalisation en tant que paroi de canal d'écoulement d'une turbine à gaz (1).

8. Paroi (21) selon la revendication 7 **caractérisée en ce que** le premier segment de paroi (35) est réalisé en tant qu'anneau de guidage pour une couronne d'aubes mobiles (25) et le deuxième segment de paroi (33) en tant qu'anneau de plateforme d'une couronne d'aubes directrices (23).

9. Paroi (21) selon la revendication 7 **caractérisée en ce que** le deuxième segment de paroi (33) est réalisé en tant qu'anneau de guidage pour une couronne d'aubes mobiles (25) et le premier segment de paroi (35) en tant qu'anneau de plateforme d'une couronne d'aubes directrices (23).

10. Paroi (21) selon l'une des revendications 1 à 5 **caractérisée par** une réalisation en tant que revêtement de chambre de combustion (16), en particulier d'une chambre de combustion de turbine à gaz (5).

11. Procédé pour rendre étanche une fente (55) entre un premier et un deuxième segment de paroi (35, 33) d'une paroi (21) soumise à une contrainte thermique par un gaz chaud (17), **caractérisé en ce qu'**un épaulement de flexion (45) du premier segment de paroi (35) est appliqué par un échauffement contre une surface d'appui (49) du deuxième segment de paroi (33) de telle manière qu'on obtient une étanchéification de la fente (55).
